# EUROPEAN PATENT SPECIFICATION

(11) **EP 4 686 535 B1**
(45) Date of publication and mention of the grant of the patent: **02.09.2026**
(21) Application number: 25186608.3
(22) Date of filing: 01.07.2025
(51) Int. Cl.: A63H 3/28, B25J 11/00, G06N 3/008, A63H 3/00

(54) **ROBOT, ROBOT CONTROL METHOD, AND PROGRAM**
ROBOTER, ROBOTERSTEUERUNGSVERFAHREN UND PROGRAMM
ROBOT, PROCÉDÉ DE COMMANDE DE ROBOT ET PROGRAMME

(30) Priority: 01.08.2024 JP 2024126219
(43) Date of publication of application: 04.02.2026
(73) Proprietor: Casio Computer Co., Ltd., Tokyo 151-8543 (JP)
(72) Inventor: Mayuzumi, Kouki, Hamura-shi, Tokyo, 205-8555 (JP); Yamada, Shunsuke, Hamura-shi, Tokyo, 205-8555 (JP)
(74) Representative: Grünecker Patent- und Rechtsanwälte PartG mbB

(56) References cited:
- JP-A- 2012 220 783
- US-A1- 2022 297 307

## Description

The present disclosure relates to a robot, a robot control method, and a program.

Robots that imitate living creatures are known. For example, Unexamined Japanese Patent Application Publication No.2003-71763 discloses a robot that transitions to a sleep mode in response to specific handling.
Japanese Patent Application Publication JP 2012-220783 A, which discloses the features of the preambles of the independent claims, describes a robot device for care recipients that simulates an infant. The robot device includes external stimulus detection means, internal state detection means, state determination means and state representation means for representing the determined state. State transitions are possible under control of a controller.
US Patent Application Publication US 2022/297307 A1 describes a control apparatus and method for a robot, wherein basic character parameters of the robot can be corrected and changed depending on simulated growth degree and external stimulus, including illumination.

For such robots capable of representing a sleep state of living creatures, there is a growing desire to further enhance lifelikeness.

The present disclosure is made with the view of the above circumstances, and an objective of the present disclosure is to enhance the lifelikeness of the robots.

This is achieved by the features of the independent claims.

According to the present disclosure, the lifelikeness of the robot can be enhanced.

A more complete understanding of this application can be obtained when the following detailed description is considered in conjunction with the following drawings, in which:
FIG. 1 is a drawing illustrating an appearance of a robot according to Embodiment 1;
FIG. 2 is a cross-sectional view of the robot according to Embodiment 1 as viewed from the side;
FIG. 3 is a block diagram illustrating a functional configuration of the robot according to Embodiment 1;
FIG. 4 is a diagram illustrating an example of a drowsiness value table according to Embodiment 1;
FIG. 5 is a diagram illustrating an example of a light-dark table according to Embodiment 1;
FIG. 6 is a diagram illustrating an event table according to Embodiment 1;
FIG. 7 is a diagram illustrating an example of spontaneous action table according to Embodiment 1;
FIG. 8 is a first flowchart illustrating a flow of robot control processing according to an embodiment; and
FIG. 9 is a second flowchart illustrating a flow of robot control processing according to an embodiment.

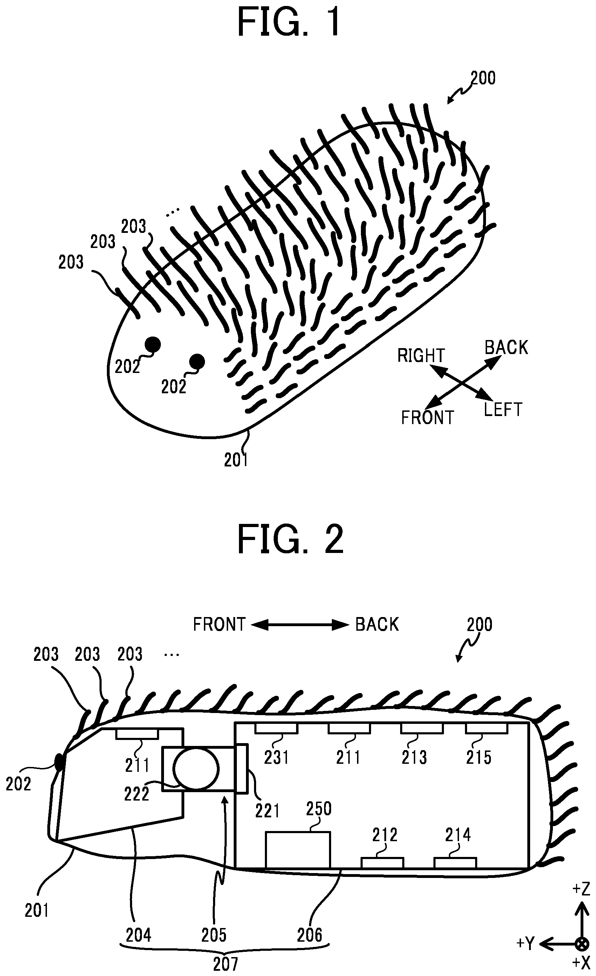

Hereinafter, embodiments of the present disclosure are described with reference to the drawings. In the drawings, the same or corresponding components are denoted with the same reference signs. A robot 200 according to Embodiment 1 is a device that imitates a living creature and is capable of representing various states of the living creature in a pseudo-manner. In particular, the robot 200 according to Embodiment 1 is a pet-type robot capable of representing a pseudo-sleep state. As an example, as illustrated in FIG. 1, the robot 200 according to Embodiment 1 is a pet robot resembling a small animal. The robot 200 includes an exterior 201 provided with decorative parts 202 resembling eyes and bushy fur 203. The robot 200 includes a housing 207, as illustrated in FIG. 2. The housing 207 is covered by the exterior 201, and is accommodated inside the exterior 201. The housing 207 includes a head 204, a joint 205, and a torso 206. The joint 205 couples the head 204 to the torso 206.

The exterior 201 is an example of an exterior member, is elongated in a front-rear direction, and has a bag-like shape that is capable of accommodating the housing 207 therein. The exterior 201 is formed in a barrel shape from the head 204 to the torso 206, and integrally covers the torso 206 and the head 204. With such a shaped exterior 201, the robot 200 is formed in a prone posture. An outer material of the exterior 201 is made of an artificial pile fabric that resembles the fur 203 of a small animal to imitate the feel of a small animal. The lining of the exterior 201 is made of flexible materials such as leather, resin, rubber, etc. Being made of flexible materials, the exterior 201 follows movements of the housing 207. Specifically, the exterior 201 follows rotation of the head 204 relative to the torso 206.

The torso 206 extends in the front-rear direction and makes contact via the exterior 201 with a placement surface, such as a floor or a table, where the robot 200 is placed. The torso 206 includes a twist motor 221 at a front end thereof. The head 204 is coupled to the front end of the torso 206 via the joint 205. The joint 205 includes a vertical motor 222. In FIG. 2, the twist motor 221 is included in the torso 206, but the twist motor 221 may be included in the joint 205. The twist motor 221 and the vertical motor 222 allow rotatable connection of the head 204 to the torso 206 around the left-right direction (X-axis direction) and the front-back direction (Y-axis direction) as axes.

The joint 205 couples the torso 206 and the head 204 so as to enable rotation around a first rotational axis that passes through the joint 205 and that extends in the front-rear direction (Y-axis direction) of the torso 206. The twist motor 221 is a servo motor for rotating the head 204, with respect to the torso 206, clockwise (right rotation) around the first rotational axis (forward rotation) or counter-clockwise (left rotation) around the first rotational axis (reverse rotation). Additionally, the joint 205 couples the torso 206 and the head 204 so as to enable rotation around a second rotational axis that passes through the joint 205 and that extends in the left-right direction (X-axis direction) of the torso 206. The vertical motor 222 is a servo motor for rotating the head 204 upward (forward rotation) or downward (reverse rotation) around the second rotational axis.

The robot 200 includes a touch sensor 211 on the head 204 and the body 206. The robot 200 includes, on the torso 206, an acceleration sensor 212, a microphone 213, a gyrosensor 214, an illuminance sensor 215, a speaker 231, and a battery 250. At least some of the acceleration sensor 212, the microphone 213, the gyrosensor 214, the illuminance sensor 215, and the speaker 231 are not necessarily provided only on the torso 206, and may be provided on the head 204, or may be provided on both the torso 206 and the head 204.

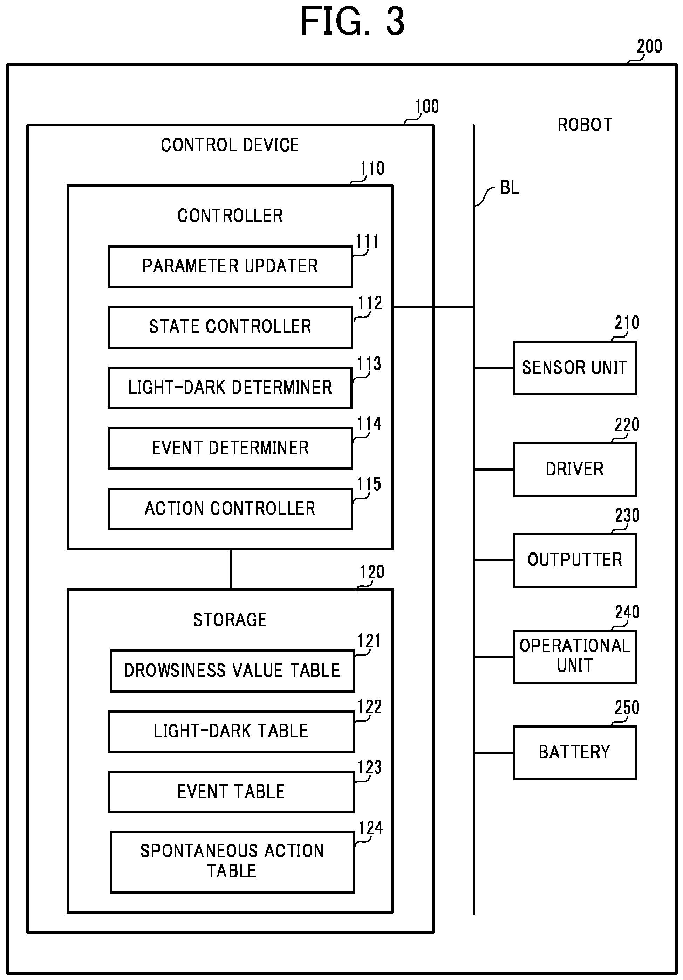

Next, a functional configuration of the robot 200 is described with reference to FIG. 3. As illustrated in FIG. 3, the robot 200 includes a control device 100, a sensor unit 210, a driver 220, an outputter 230, and an operational unit 240. In one example, these components are connected via a bus line BL. Note that a configuration may be employed in which, instead of the bus line BL, a wired interface such as a universal serial bus (USB) cable, or a wireless interface such as Bluetooth (registered trademark), is used.

The control device 100 includes a controller 110 that is an example of control means and a storage 120 that is an example of storage means. The control device 100 controls actions of the robot 200 by the controller 110 and the storage 120. The controller 110 includes a central processing unit (CPU). The CPU, for example, is a processor such as a microprocessor, and is a central calculation processing unit that executes various types of processing and calculations. In the controller 110, the CPU reads out a control program stored in the ROM and controls the behavior of the entire robot 200 while using the RAM as working memory. Additionally, although not illustrated in the drawings, the controller 110 is provided with a clock function, a timer function, and the like, and thus can measure the date and time, and the like. The controller 110 may also be called a "processor".

The storage 120 includes a read-only memory (ROM), a random access memory (RAM), a flash memory, and the like. The storage 120 stores programs and data, including an operating system (OS) and an application program, to be used by the controller 110 to execute various types of processing. Moreover, the storage 120 stores data generated or acquired through execution of the various types of processing by the controller 110. Specifically, the storage 120 stores a drowsiness value table 121, a light-dark table 122, an event table 123, and a spontaneous action table 124. These details are described later.

The sensor 210 includes the touch sensor 211, the acceleration sensor 212, the microphone 213, the gyrosensor 214, and the illumination sensor 215 described above. The controller 110 acquires, via the bus line BL, detection values detected by the various sensors included in the sensor unit 210. The sensor unit 210 may include a sensor other than these sensors. The types of external stimuli acquirable by the controller 110 can be increased by increasing the types of sensors of the sensor unit 210.

The touch sensor 211 includes, for example, a pressure sensor and a capacitance sensor, and detects the presence or absence of contact by an object as well as the strength of the contact. Based on the detection value of the touch sensor 211, the controller 110 can detect petting or striking of the head 204 or the torso 206 by a user.

The acceleration sensor 212 detects an acceleration applied to the torso 206 of the robot 200. The gyrosensor 214 detects an angular velocity applied to the torso 206 of the robot 200. Using the acceleration sensor 212 and the gyrosensor 214, the controller 110 can detect the current posture and changes in the posture of the robot 200. Using the acceleration sensor 212 and the gyrosensor 214, the controller 110 can also detect whether the user has lifted the robot 200, changed the orientation of the robot 200, or thrown the robot 200.

The microphone 213 detects an ambient sound of the robot 200. The controller 110 can detect, based on a component of the sound detected by the microphone 213, for example, that the user is calling the robot 200, that the user is clapping hands, and the like. Among the components of the sensor unit 210, the touch sensor 211, the acceleration sensor 212, the microphone 213, and the gyrosensor 214 are examples of external stimulus detection means that detect external stimuli.

The illuminance sensor 215 detects ambient illuminance around the robot 200. The illuminance sensor 215 receives light via a light receiving element and converts the received light into an electrical signal using an element such as a photodiode or a phototransistor, thereby detecting the ambient illuminance around the robot 200. The controller 110 can detect that the surroundings of the robot 200 have become brighter or darker based on the illuminance detected by the illuminance sensor 215. The illuminance sensor 215 is an example of illuminance detection means that detects the ambient illuminance around the robot 200.

The driver 220 includes the twist motor 221 and the vertical motor 222 described above, and is driven by the controller 110. The robot 200 can represent movements of turning the head 204 sideways using the twist motor 221, and can represent movements of lifting/lowering the head 204 using the vertical motor 222. The outputter 230 includes the speaker 231, and sound is output from the speaker 231 as a result of the controller 110 inputting sound data into the outputter 230. For example, the robot 200 emits a pseudo-animal sound as a result of the controller 110 inputting animal sound data of the robot 200 into the outputter 230. The outputter 230 may include a display, a light emitting diode (LED), or the like, instead of or in addition to the speaker 231. The operational unit 240 includes an operation button, a volume knob, or the like. In one example, the operational unit 240 is an interface for receiving user operations for turning power on or off, adjusting the volume of an output sound, and the like. The battery 250 stores power to be used in the robot 200. In response to the robot 200 having returned to a charging station, the battery 250 is charged by the charging station.

Next, a functional configuration of the controller 110 is described. As illustrated in FIG. 3, the controller 110 functionally includes a parameter updater 111 that is an example of parameter update means, a state controller 112 that is an example of state control means, a light-dark determiner 113 that is an example of light-dark determination means, an event determiner 114 that is an example of event determination means, and an action controller 115 that is an example of action control means. In the controller 110, the CPU performs control by reading the program stored in the ROM out to the RAM and executing this program, to thereby function as the components described above.

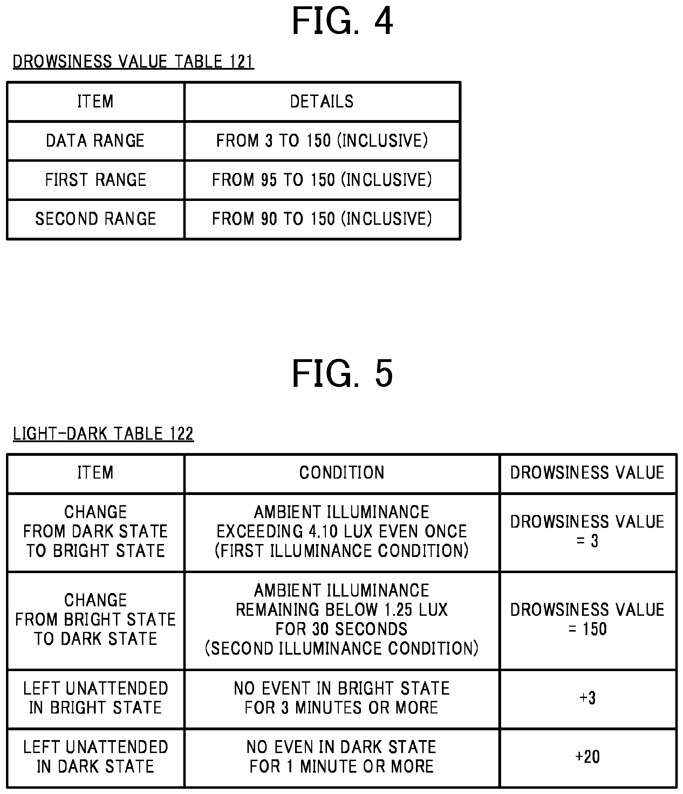

The parameter updater 111 sets and updates the drowsiness value. Here, the drowsiness value is a parameter indicating a degree of pseudo-drowsiness of the robot 200. The larger the drowsiness value, the greater the degree of drowsiness. In response to an increase in the drowsiness value, the robot 200 behaves in a manner imitating a state where a living creature feels sleepy. On the other hand, in response to a decrease in the drowsiness value, the robot 200 behaves in a manner imitating a state where a living creature does not feel sleepy. As defined in the drowsiness value table 121 illustrated in FIG. 4 as an example, the drowsiness value ranges from a minimum value of 3 to a maximum value of 150. The drowsiness value varies depending on factors such as external stimuli applied to the robot 200 and the ambient illuminance around the robot 200, as detailed later.

Returning to FIG. 3, the state controller 112 causes the state of the robot 200 to transition to a pseudo-sleep state based on the drowsiness value updated by the parameter updater 111. Here, the state of the robot 200 corresponds to an action mode of the robot 200. In accordance with the drowsiness value updated by the parameter updater 111, the state controller 112 switches the state of the robot 200 between a pseudo-sleep state (hereinafter referred to simply as a "sleep state") and a pseudo-wake-up state (hereinafter referred to simply as a "wake-up state"). The sleep state is a mode (sleep mode) imitating the robot 200 being asleep and representing the pseudo-sleep of the robot 200. In contrast, the wake-up state is a mode (wake-up mode) not being a sleep state and imitating the robot 200 being awake, that is, being awaken. Since the robot 200 is capable of performing a normal action, the wake-up state may be referred to as the "normal state", "awake state", or the like.

The state controller 112 causes the state of the robot 200 to transition from the wake-up state to the sleep state and from the sleep state to the wake-up state based on the drowsiness value updated by the parameter updater 111. Specifically, the state controller 112 causes the state of the robot 200 to transition from the wake-up state to the sleep state in response to a change in the drowsiness value changes from a value outside a first range to a value within the first range. Furthermore, the state controller 112 causes the state of the robot 200 to transition from the sleep state to the wake-up state in response to a change in the drowsiness value from a value within a second range to a value outside the second range.

Here, the first range is a range referenced in transitioning from the wake-up state to the sleep state. Specifically, the first range is from 95 to 150, as defined in the drowsiness value table 121 illustrated in FIG. 4. In other words, the state controller 112 causes the state of the robot 200 to transition from the wake-up state to the sleep state in response to a change in the drowsiness value from a value below 95 to a value of 95 or above. In contrast, the second range is a range referenced in transitioning from the sleep state to the wake-up state. Specifically, the second range is from 90 to 150, as defined in the drowsiness value table 121 illustrated in FIG. 4. In other words, the state controller 112 causes the state of the robot 200 to transition from the sleep state to the wake-up state in response to a change in the drowsiness value changes from a value of 90 or greater to a value less than 90.

Since the second range includes values of 90 or greater, the second range includes the first range that is defined as values of 95 or greater. Such inclusion of the first range in the second range ensures that the transitions between the sleep state and the wake-up state do not occur too frequently. In other words, hysteresis is introduced into the conditions for switching between the sleep state and wake-up state.

Returning to FIG. 3, the light-dark determiner 113 determines the brightness or darkness of the surroundings of the robot 200 based on the illuminance detected by the illuminance sensor 215. Specifically, in response to the ambient illuminance satisfying the first illuminance condition, the light-dark determiner 113 determines that the ambient illuminance becomes brighter. After that, until the ambient illuminance satisfies the second illuminance condition, the light-dark determiner 113 continues to determine the ambient illuminance as bright. Additionally, in response to the ambient illuminance satisfying the second illuminance condition, the light-dark determiner 113 determines that the surroundings have darkened. After that, until the ambient illuminance satisfies the first illuminance condition, the light-dark determiner 113 continues to determine the ambient illuminance as dark.

The first illuminance condition is used to determine whether the ambient illuminance around the robot 200 has changed from the dark state to the bright state. As defined in the light-dark table 122 illustrated in FIG. 5, the first illuminance condition is satisfied in response to the ambient illuminance having exceeded a first illuminance threshold. In contrast, the second illuminance condition is used to determine whether the ambient illuminance around the robot 200 has changed from the bright state to the dark state. As defined in the light-dark table 122, the second illuminance condition is satisfied in response to the ambient illuminance falling below a second illuminance threshold and remaining in that state for a predetermined duration. Here, the first illuminance threshold is, for example, 4.10 lux, the second illuminance threshold is, for example, 1.25 lux, and the predetermined duration is, for example, 30 seconds.

The parameter updater 111 updates the drowsiness value based on the light-dark determination results provided by the light-dark determiner 113. Specifically, in response to a change in the ambient illuminance from the dark state to the bright state, the parameter updater 111 updates the drowsiness value to a value outside the second range, that is, a value that causes the state of the robot 200 to shift to the wake-up state by the state controller 112. As an example, in response to the ambient illuminance changing from the dark state to the bright state, the parameter updater 111 updates the drowsiness value to a minimum value of 3.

The case where the ambient illuminance changes from the dark state to the bright state corresponds to a situation where the ambient illuminance first satisfies the first illuminance condition after satisfying the second illuminance condition. Such a situation may occur, for example, in a case where dawn breaks or room lights are turned on. In response to update of the drowsiness value to the minimum value, the state controller 112 causes the state of the robot 200 to transition from the sleep state to the wake-up state, provided that the current state of the robot 200 is the sleep state. This allows the state controller 112 to imitate the robot 200 waking up from sleep.

In contrast, in response to the ambient illuminance changing from the bright state to the dark state, the parameter updater 111 updates the drowsiness value to a value within the first range, that is, a value with which the state controller 112 causes the state of the robot 200 to transition to the sleep state. As an example, in response to a change in the ambient illuminance from the bright state to the dark state, the parameter updater 111 updates the drowsiness value to the maximum value of 150.

The case where the ambient illuminance changes from the bright state to the dark state corresponds to a situation where the ambient illuminance first satisfies the second illuminance condition after satisfying the first illuminance condition. Such a situation occur, for example, after sunset or turn-off of the room lights. In response to update of the drowsiness value to the maximum value, the state controller 112 cases the state of the robot 200 to transition from the wake-up state to the sleep state, provided that the current state of the robot 200 is the wake-up state. This allows the state controller 112 to imitate the robot 200 falling asleep.

As described above, the first illuminance condition is satisfied immediately in response to the ambient illuminance exceeding the first illuminance threshold (e.g., 4.10 lux). In contrast, the second illuminance condition is not satisfied immediately in response to the ambient illuminance falling below the second illuminance threshold (e.g., 1.25 lux). Instead, the second condition is only satisfied in response to the ambient illuminance remaining below the second illuminance threshold for a predetermined duration (e.g., 30 seconds). Thus, in response to the surroundings becoming brighter, the robot 200 immediately transitions from the sleep state to the wake-up state, while a response to the surroundings becoming darker to transition from the wake-up state to the sleep state takes some time. This can enhance the accuracy of imitating the behavior of actual living creature.

Returning to FIG. 3, the event determiner 114 determines whether an event based on the external stimuli detected by the sensor unit 210 has occurred. Here, the external stimuli refer to stimuli acting on the robot 200 from the external environment of the robot 200. Specifically, the external stimuli may include contact detected by the touch sensor 211, acceleration detected by the acceleration sensor 212, sound detected by the microphone 213, angular velocity detected by the gyrosensor 214, or a combination of these stimuli.

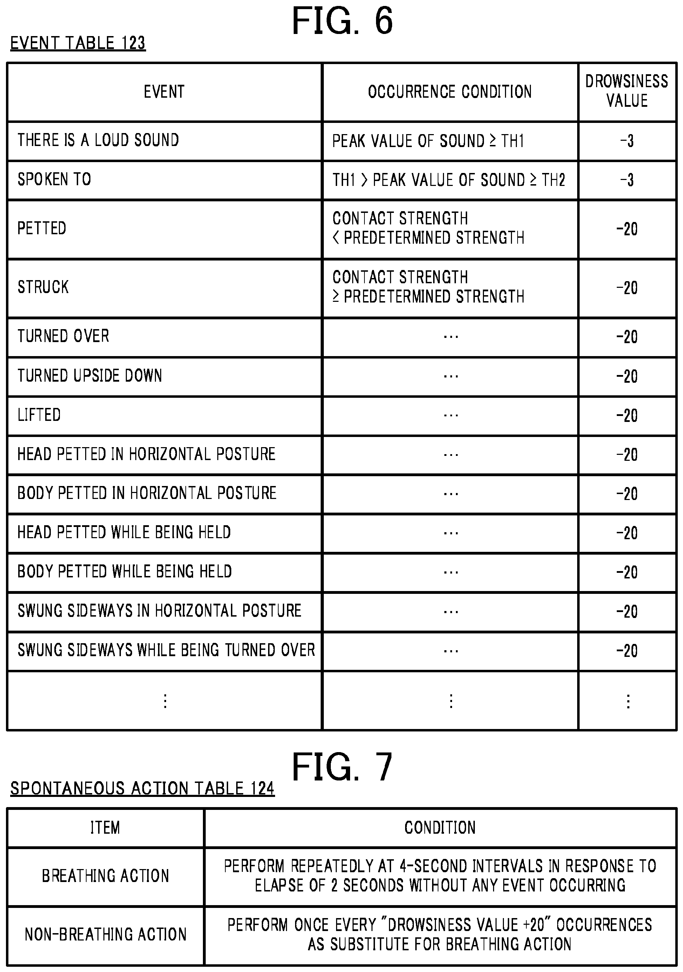

The event determiner 114 determines whether any of a plurality of types of events specified in the event table 123 has occurred, based on detection values from the touch sensor 211, the acceleration sensor 212, the microphone 213, and the gyrosensor 214 in the sensor unit 210. The event table 123 defines various types of events that can occur in the robot 200 and the conditions for each event type. As an example illustrated in FIG. 6, the event table 123 defines the various types of events, such as "there is a loud sound", "spoken to", "petted", "struck", and "turned over".

Referring to the event table 123, the event determiner 114 determines whether the detection values of the external stimuli from the sensor unit 210 satisfy the occurrence conditions for any type of event. For example, in response to the microphone 213 detecting a sound with a peak value equal to or higher than the first threshold TH1, the event determiner 114 determines that the "there is a loud sound" event has occurred. In response to the microphone 213 detecting a sound with a peak value lower than the first threshold TH1 and equal to and higher than the second threshold TH2, the event determiner 114 determines that the "spoken to" event has occurred. In response to the touch sensor 211 on the head 204 or the torso 206 detecting contact below a predetermined intensity, the event determiner 114 determines that the "petted" event has occurred. In response to the touch sensor 211 on the head 204 or the torso 206 detecting contact equal to or higher than the predetermined intensity, the event determiner 114 determines that the "struck" event has occurred. The occurrence conditions are not limited to the detection values from a single sensor, but may also involve combinations of detection values from a plurality of sensors in the sensor unit 210. For example, the event "head petted in horizontal posture" involves detection values from the touch sensor 211, the acceleration sensor 212, and the gyrosensor 214 in the head 204. In this way, the event determiner 114 determines, based on the external stimuli detected by the sensor unit 210, whether the occurrence conditions for any event type specified in the event table 123 are satisfied. In response to the conditions for any event type being satisfied, the event determiner 114 determines that the type of event has occurred.

Returning to FIG. 3, the action controller 115 controls actions of the robot 200. Here, the actions of the robot 200 are achieved through either or both a motion by the driver 220 and an output from the outputter 230. Specifically, the motion by the driver 220 corresponds to rotating the head 204 by the driving of the twist motor 221 or the vertical motor 222. Additionally, the output from the outputter 230 corresponds to generating sounds through the speaker 231 or emitting light via the LED. The actions of the robot 200 may also be called gestures, behaviors, or the like of the robot 200.

In response to detection of the external stimuli by the sensor unit 210, the action controller 115 operates the robot 200 in accordance with the detected external stimuli. Specifically, in a case where the current state of the robot 200 corresponds to the wake-up state, in response to the event determiner 114 determining that any type of event having occurred, the action controller 115 causes the robot 200 to perform a corresponding action that corresponds to the type of the event having occurred. For example, in the case of the "there is a loud sound" event, the action controller 115 causes the robot 200 to perform a surprised action. In the case of the "spoken to" event, the action controller 115 causes the robot 200 to perform an action of reacting to being spoken to. In the case of the "turned over" event, the action controller 115 causes the robot 200 to perform an action of expressing an unpleasant reaction. In the case of the "petted" event, the action controller 115 causes the robot 200 to perform an action expressing joy. In the case of the "struck" event, the action controller 115 causes the robot 200 to perform an action expressing sorrow.

Although omitted from the drawings, the correspondence between the events and the corresponding actions is stored in advance in the storage 120 as an action table. The action table defines, for each event type, the corresponding actions including the rotation amount and the rotation direction of the twist motor 221, the rotation amount and the rotation direction of the vertical motor 222, and the type and output volume of sound emitted from the speaker 231. The action controller 115 refers to the action table and causes the robot 200 to perform a corresponding action that corresponds to the type of the event having occurred.

On the other hand, in a case where the current state of the robot 200 corresponds to the sleep state, the action controller 115 does not cause the robot 200 to perform the corresponding action as described above, even if the event determiner 114 determines that any type of event has occurred. Specifically, since the sleep state imitates the condition of a living creature asleep, the action controller 115 cause the robot 200 to perform no actions reacting to the external stimuli at all or to perform actions that are less active compared to actions in the wake-up state. For example, in response to the event determiner 114 determining that any of the events has occurred, the action controller 115 may cause the robot 200 to perform actions, such as turning over while sleeping or uttering sleep talk.

The parameter updater 111 updates the drowsiness value based on the external stimuli detected by the sensor unit 210. As illustrated in FIG. 6, the event table 123 defines the correspondence between the type of event and an amount of change in the drowsiness value. The parameter updater 111 refers to the event table 123 and reads the amount of change in the drowsiness value corresponding to the type of event determined by the event determiner 114 to have occurred. Then, the parameter updater 111 changes the drowsiness value by the read amount of change. For example, in response to an occurrence of an event, such as "there is a loud sound" or "spoken to", the parameter updater 111 decreases the drowsiness value by 3. Also, in response to an occurrence of an event, such as "petted", "struck", or "turned over", the parameter updater 111 decreases the drowsiness value by 20.

In response to the event determiner 114 determining that any type of event has occurred, the parameter updater 111 updates the drowsiness value in accordance with the type of the event having occurred, regardless of whether the current state of the robot 200 corresponds to the wake-up state or the sleep state. Thus, in a case where the robot 200 is in the wake-up state, the more events occur, the higher the degree of wakefulness of the robot 200 becomes. In other words, the degree of drowsiness of the robot 200 decreases. Also, in a case where the robot 200 is in the sleep state, the more events occur, the robot 200 enters a lighter state of sleep. In this way, in response to an occurrence of the event based on the external stimuli detected by the sensor unit 210, the action controller 115 causes the robot 200 to perform an action corresponding to the type of the event having occurred, and the parameter updater 111 updates the drowsiness value in accordance with the type of the event having occurred.

In contrast, in response to the event determiner 114 not determining that any type of event has occurred, that is, in response to a non-occurrence of any type of event remaining, the action controller 115 causes the robot 200 to perform spontaneous actions. Here, the spontaneous actions refer to actions that the robot 200 spontaneously (actively) performs, such as an imitated breathing action, independently of external stimuli and events. The action controller 115 causes the robot 200 to perform, as spontaneous actions, a breathing action imitating breathing and a non-breathing action imitating an action other than the breathing action. The non-breathing action includes, for example, random body movement and spontaneous generation of animal sounds.

In causing the robot 200 to perform the breathing action, the action controller 115 slightly moves the twist motor 221 or the vertical motor 222 or outputs breathing sounds from the speaker 231 to express the movements of a living creature breathing. Additionally, in causing the robot 200 to perform non-breathing action, the action controller 115 randomly moves the twist motor 221 or the vertical motor 222 or outputs random animal sounds from the speaker 231.

More specifically, in a case where no events occur, the action controller 115 causes the robot 200 to perform breathing or non-breathing actions at predetermined time intervals. The detailed conditions for performing breathing and non-breathing actions are defined in the spontaneous action table 124 illustrated in FIG. 7. Specifically, in response to a lapse of 2 seconds without any event based on external stimuli occurring, the action controller 115 causes the robot 200 to perform a breathing action. In response to a further lapse of 2 seconds without any event occurring after the breathing action, the action controller 115 causes the robot 200 to perform a breathing action again. Assuming that it takes 2 seconds to perform a breathing action, the action controller 115 causes the robot 200 to repeatedly perform breathing actions at four-second intervals, or at a frequency of once every 4 seconds, as long as no events occur.

Additionally, as defined in the spontaneous action table 124, the action controller 115 causes the robot 200 to perform non-breathing actions as substitutes for breathing actions at a frequency of once every "drowsiness value +20" occurrences. As described above, the timing at which the action controller 115 causes the robot 200 to perform breathing actions occurs once every 4 seconds while no events have occurred. At these timings to cause the robot 200 to perform breathing actions, the action controller 115 causes the robot 200 to perform non-breathing actions as substitutes for the breathing actions, at a frequency in accordance with the drowsiness value set by the parameter updater 111. For example, at a current drowsiness value of 50, the action controller 115 causes the robot 200 to perform breathing actions 69 out of 70 times, and non-breathing actions at a frequency of once every 70 occurrences.

By varying the frequency of non-breathing actions performed in accordance with the drowsiness value, the higher the drowsiness value, the more frequent the low-activity breathing actions, while the lower the drowsiness value, the more frequent the high-activity non-breathing actions. This can achieve expression of the liveliness of a living creature in accordance with the degree of drowsiness and enhance the lifelikeness.

In response to the event determiner 114 not determining that any type of event has occurred, that is, in response to a non-occurrence of any type of event remaining, as described above, the action controller 115 causes the robot 200 to perform a spontaneous action, while the parameter updater 111 updates the drowsiness value such that the degree of pseudo-drowsiness of the robot 200 increases as the continuous duration of this state extends. In other words, the parameter updater 111 gradually increases the drowsiness value over time while no events based on external stimuli occur. This allows the parameter updater 111 to achieve in the robot 200 a pseudo-representation of the gradual onset of drowsiness that would occur in the actual living creatures in a case where the actual living creatures are left unattended without external stimuli.

More specifically, the parameter updater 111 changes the frequency and the degree of increase in the drowsiness value based on the ambient illuminance around the robot 200 detected by the illuminance sensor 215. Specifically, the parameter updater 111 increases the drowsiness value at a greater rate over time in a case where the illuminance detected by the illuminance sensor 215 is lower compared with a case where the illuminance is higher.

The parameter updater 111 updates the drowsiness value in accordance with the ambient illuminance, based on the contents defined in the light-dark table 122 illustrated in FIG. 5. Specifically, in response to a lapse of 3 minutes or more without any event occurring with the ambient illuminance in a bright state, the parameter updater 111 determines that the robot 200 has been left unattended in a bright state and increases the drowsiness value by 3. In other words, in response to the light-dark determiner 113 determining that the ambient illuminance is in a bright state, as well as no event occurring, the parameter updater 111 increases the drowsiness value by 3 every 3 minutes. In contrast, in response to a lapse of 1 minute or more without any event occurring with the ambient illuminance in a dark state, the parameter updater 111 determines that the robot 200 has been left unattended in a dark state and increases the drowsiness value by 20. In other words, in response to the light-dark determiner 113 determining that the ambient illuminance is in a dark state, as well as no event occurring, the parameter updater 111 increases the drowsiness value by 20 every 1 minute.

In this way, in the case where the robot 200 is left unattended in the dark state, the drowsiness value increases more rapidly compared to the case where the robot 200 is left in the bright state. This allows the robot 200 to fall asleep faster and enter a deeper sleep in the dark state. For example, in a case where a user lies beside the robot 200 and the robot 200 wakes up due to stimulation from the user, the robot 200 quickly falls asleep again. In contrast, in a case where the robot 200 is left unattended in the bright state, the robot 200 is slower to fall asleep, and even if the robot 200 falls asleep, a light sleep remains for a longer period. Thus, even if the robot is asleep, the robot 200 wakes up immediately in response to the user petting the robot 200. In this way, by adjusting the degree of change in the drowsiness value in accordance with the surrounding brightness or darkness in the case where the robot 200 is left unattended, the lifelikeness of the robot 200 can be enhanced.

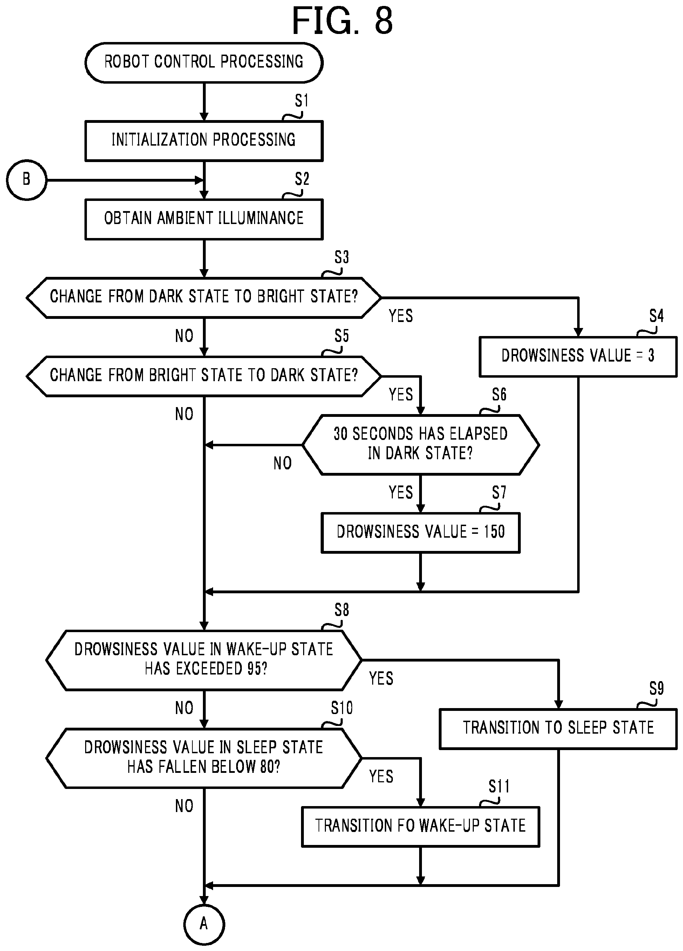

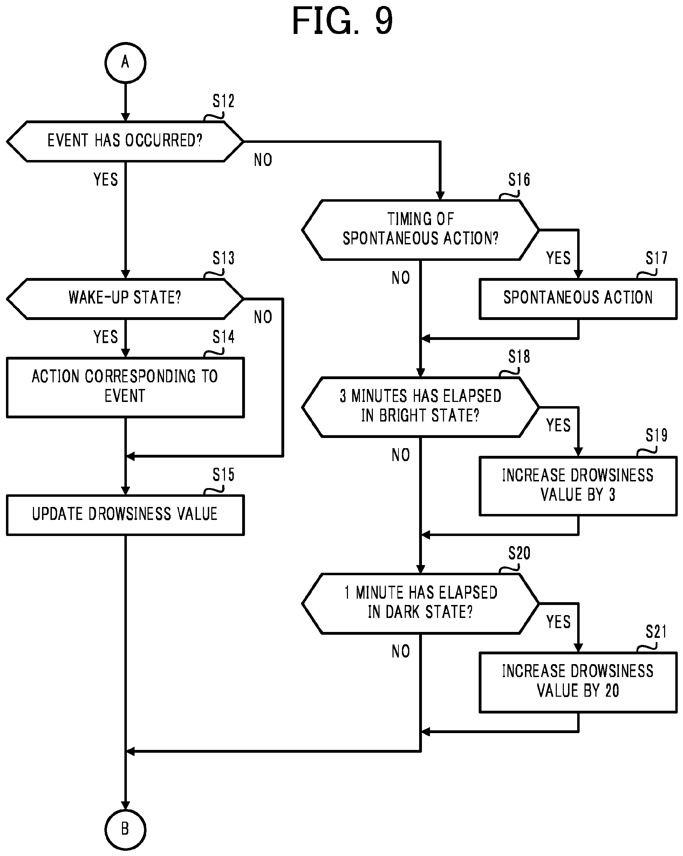

Next, the flow of the robot control processing according to the present embodiment is described with reference to FIGS. 8 and 9. The robot control processing illustrated in FIGS. 8 and 9 is executed by the controller 110 of the control device 100 in response to turning-on of the power of the robot 200. The robot control processing illustrated in FIGS. 8 and 9 is an example of the robot control method.

As illustrated in FIG. 8, upon start of the robot control processing, the controller 110 executes initialization processing (step S1). In the initialization processing, the controller 110 sets various types of parameters used for controlling the robot 200, including the drowsiness value, to the initial values. The initial value of the drowsiness value is preset to an appropriate value within a range of 3 to 150.

After performing the initialization processing, the controller 110 functions as the light-dark determiner 113 and acquires the illuminance detected by the illuminance sensor 215 (step S2). Upon obtaining the ambient illuminance, the controller 110 determines whether the ambient illuminance has changed from the dark state to the bright state (step S3). In response to the ambient illuminance having changed from the dark state to the bright state (Yes in step S3), the controller 110 functions as the parameter updater 111 and updates the drowsiness value to the minimum value of 3 (step S4). On the other hand, in response to the ambient illuminance having not changed from the dark state to the bright state (No in step S3), the controller 110 subsequently determines whether the ambient illuminance has changed from the bright state to the dark state (step S5). In response to the ambient illuminance having changed from the bright state to the dark state (Yes in step S5), the controller 110 determines whether 30 seconds have elapsed in the dark state (step S6). In response to a lapse of 30 seconds in the dark state (Yes in step S6), the controller 110 functions as the parameter updater 111 and updates the drowsiness value to the maximum value of 150 (step S7).

In a case of no change in the ambient illuminance from the dark state to the bright state or from the bright state to the dark state (No in step S5), the controller 110 does not update the drowsiness value. Also, in a case where the dark state does not remain for 30 seconds, which is a predetermined duration, even with the ambient illuminance having changed from the bright state to the dark state (No in step S6), the controller 110 does not update the drowsiness value.

Next, the controller 110 functions as the state controller 112 and determines whether the current state of the robot 200 is the wake-up state and whether the drowsiness value has exceeded 95 (step S8). In response to the current state being the wake-up state and the drowsiness value having exceeded 95 (Yes in step S8), the controller 110 causes the state of the robot 200 to transition from the wake-up state to the sleep state (step S9). In response to the current state being the wake-up state and the drowsiness value being 95 or less, or in response to the current state being the sleep state (No in step S8), the controller 110 determines whether the current state is the sleep state and the drowsiness value has fallen below 90 (step S10). In response to the current state is the sleep state and the drowsiness value having fallen below 90 (Yes in step S10), the controller 110 causes the state of the robot 200 to transition from the sleep state to the wake-up state (step S11). In response to the current state being the wake-up state and the drowsiness value being 95 or less, or in response to the current state being the sleep state and the drowsiness value being 90 or more (No in step S10), the controller 110 does not change the state of the robot 200.

Returning to FIG. 9, next, the controller 110 functions as the event determiner 114 and determines whether an event has occurred (step S12). Specifically, the controller 110 determines, based on the detection values from the sensor unit 210, whether the occurrence condition for any type of event defined in the event table 123 has been satisfied.

In response to an occurrence of an event (Yes in step S12), the controller 110 determines whether the current state of the robot 200 in the wake-up state (step S13). In response to the current state being the wake-up state (Yes in step S13), the controller 110 functions as the action controller 115 and causes the robot 200 to perform an action corresponding to the type of the event having occurred (step S14). In contrast, in response to the current state being the sleep state (No in step S13), the controller 110 skips step S14. In this case, the controller 110 either does not cause the robot 200 to perform any action or causes the robot 200 to perform less active actions than those performed in the wake-up state.

Next, the controller 110 functions as the parameter updater 111 and updates the drowsiness value in accordance with the type of the event having occurred (step S15). Specifically, the controller 110 refers to the event table 123 and changes the drowsiness value based on the amount of change associated with the type of the event having occurred in step S12.

On the other hand, in response to a non-occurrence of an event in step S12 (No in step S12), the controller 110 determines whether the timing for the spontaneous action has arrived (step S16). Specifically, the controller 110 determines whether 2 seconds have elapsed without any events occurring. In response to the timing for the spontaneous action having arrived (Yes in step S16), the controller 110 functions as the action controller 115 and causes the robot 200 to perform spontaneous actions (step S17). Specifically, the controller 110 causes the robot 200 to perform non-breathing actions once every "drowsiness value +20" occurrences, and breathing actions in all other instances. In contrast, in response to the timing for the spontaneous actions having not arrived (No in step S16), the controller 110 skips step S17.

Next, the controller 110 determines whether 3 minutes have elapsed without any events occurring in the bright state (step S18). In response to 3 minutes having elapsed in the bright state (Yes in step S18), the controller 110 functions as the parameter updater 111 and increases the drowsiness value by 3 (step S19). In contrast, in response to 3 minutes having not elapsed in the bright state (No in step S18), the controller 110 skips step S19.

Next, the controller 110 determines whether 1 minute has elapsed without any events occurring in the dark state (step S20). In response to 1 minute having elapsed in the dark state (Yes in step S20), the controller 110 functions as the parameter updater 111 and increases the drowsiness value by 20 (step S21). In contrast, in response to 1 minute having not elapsed in the dark state (No in step S20), the controller 110 skips step S21.

Subsequently, the controller 110 returns the processing to step S2. The controller 110 repeats steps S2 through S21 as long as the robot 200 remains powered on and operates normally. Through this process, the controller 110 switches between the sleep state and the wake-up state in accordance with the drowsiness value while updating the drowsiness value based on the ambient illuminance and the external stimuli.

As described above, the robot 200 according to the present embodiment updates the drowsiness value, which is a parameter indicating the degree of the pseudo-drowsiness, based on the external stimuli, and causes the state of the robot 200 to transition to the sleep state based on the drowsiness value. While controlling the sleep state with a simple trigger may not sufficiently express the lifelikeness of a living creature, the robot 200 according to the present embodiment uses the drowsiness value to control the sleep state, thus enabling expression of the lifelikeness. In particular, since the drowsiness value changes based on the external stimuli, the robot 200 can express the depth of sleep, such as waking up by being petted only once in a light sleep or not waking up by being petted several times in a deep sleep. Additionally, even in the wake-up state, a sleepy state and a not-sleepy state can be expressed. This can enhance the lifelikeness related to sleep.

Embodiments of the present disclosure are described above, but these embodiments are merely examples and do not limit the scope of application of the present disclosure. That is, the embodiment of the present disclosure may be variously modified, and any modified embodiments are included in the scope of the present disclosure.

For example, in the above embodiment, in a case where no events occur, the action controller 115 causes the robot 200 to perform spontaneous actions, such as breathing or non-breathing actions. However, the action controller 115 may refrain from causing the robot 200 to perform non-breathing actions as spontaneous actions in a case where the current state of the robot 200 is the sleep state. In other words, the action controller 115 may cause the robot 200 to perform both breathing and non-breathing actions as spontaneous actions in the wake-up state, while only performing breathing actions as spontaneous actions in the sleep state. Alternatively, the action controller 115 may reduce the frequency of causing the robot 200 to perform non-breathing actions in the sleep state compared with the wake-up state. For example, the action controller 115 may replace breathing actions with non-breathing actions at a frequency of once every "drowsiness value +20" occurrences in the wake-up state, but at a frequency of once every "drowsiness value +50" occurrences in the sleep state. Additionally, the action controller 115 may reduce the frequency of causing the robot 200 to perform breathing actions in the sleep state compared with the wake-up state. For example, the action controller 115 may cause the robot 200 to perform breathing actions at intervals of 8 seconds in the sleep state. By decreasing the activity level of the spontaneous actions in the sleep state compared with the wake-up state, the robot can imitate the state of a sleeping living creature more realistically.

In the above embodiment, the numerical values in the tables shown in FIGS. 4 to 7 are merely examples and are not necessarily limited to these values. For example, in the event table 123 illustrated in FIG. 6, an example is provided in which the drowsiness value decreases in accordance with the type of the event having occurred. However, depending on the type of the event, the drowsiness value may increase in response to an occurrence of that event. Also, in the above example, the parameter updater 111 updates the drowsiness value through addition or subtraction based on the type of the event having occurred or the ambient illuminance. However, the way of updating the drowsiness value by the parameter updater 111 is not limited to addition or subtraction, but the parameter updater 111 may increase the drowsiness value by multiplying the drowsiness value by a predetermined multiplication factor or decrease the drowsiness value by dividing the drowsiness value by a predetermined division factor.

In the above embodiment, the parameter indicating the degree of the pseudo-drowsiness of the robot 200 uses the drowsiness value, which increases as the degree of drowsiness becomes greater. However, as a parameter indicating the degree of the pseudo-drowsiness of the robot 200, a value such as a wakefulness value, which decreases as the degree of drowsiness becomes greater and increases as the degree of drowsiness becomes smaller, may also be used. In the case of using the wakefulness value, updating the parameter to decrease the degree of pseudo-drowsiness corresponds to increasing the wakefulness value, and updating the parameter to increase the degree of degree of pseudo-drowsiness corresponds to decreasing the wakefulness value.

In the embodiment described above, the exterior 201 is formed in a barrel shape from the head 204 to the torso 206, and the robot 200 is formed in a prone posture. However, the robot 200 is not limited to resembling a living creature in a prone posture. For example, a configuration may be employed in which the robot 200 has a shape provided with arms and legs, and imitates a living creature that walks on four legs or two legs.

Although the above embodiment describes configuration in which the control device 100 is installed in the robot 200, a configuration may be employed in which the control device 100 is not installed in the robot 200 but, rather, is a separated device (for example, a server). In the case of the configuration in which the control device 100 is provided outside the robot 200, the robot 200 communicates via a communicator thereof with the control device 100 to send and receive data therebetween. The control device 100 controls the robot 200 through such communication with the robot 200.

In the above embodiment, the controller 110 functions as the parameter updater 111, the state controller 112, the light-dark determiner 113, event determiner 114, and the action controller 115 by the CPU executing programs stored in the ROM. However, in the present disclosure, the controller 110 may include, for example, dedicated hardware such as an application specific integrated circuit (ASIC), a field-programmable gate array (FPGA), various control circuitry, or the like instead of the CPU, and this dedicated hardware may function as the various components. In this case, each of the functions of the components may be achieved by individual pieces of hardware, or a single hardware may collectively achieve the functions of each of the components. Moreover, the functions of each of the components may be achieved in part by dedicated hardware and in part by software or firmware.

It is possible to provide a robot provided in advance with a configuration for achieving the functions according to the present disclosure, and it is also possible to function the existing information processing device or the like as a robot according to the present disclosure by applying a program. That is, using a program for achieving each functional configuration of the robot 200 described as examples in the above embodiment so as to be executable by a CPU or the like that controls an existing information processing device or the like enables causing the existing information processing device or the like to function as the robot according to the present disclosure.

Such a program can be applied in any procedure. For example, the program may be stored in a non-transitory computer-readable recording medium, such as flexible disk, compact disc ROM (CD-ROM), digital versatile disc ROM (DVD-ROM), or memory card and then applied. Alternatively, the program may be superimposed on a carrier wave and applied via a communication medium, such as the Internet. For example, the program may be posted on, and distributed from, a bulletin board system (BBS) on a communication network. Further, a configuration may be used such that the aforementioned processing can be executed by starting and executing the program under control of an operating system (OS) in the same manner as other application programs.

The foregoing describes some example embodiments for explanatory purposes. This detailed description, therefore, is not to be taken in a limiting sense, and the scope of the invention is defined only by the included

## Claims

1. A robot (200) capable of representing a pseudo-sleep state in a manner different from a normal state, the robot (200) comprising:
parameter update means (111) for updating, a value of a parameter indicating a degree of pseudo-drowsiness of the robot, and
state control means (112) for switching the state of the robot (200) between the pseudo-sleep state and the normal state based on the value of the parameter updated by the parameter update means (111),
**characterized by**
a storage (120) to store an event table (123) in which a value corresponding to a type of event is associated with each type of event, and in that
the updating is performed at each occurrence of a predetermined type of event, based on the event table (123), with the value corresponding to the type of the event having occurred.

2. The robot (200) according to claim 1, wherein in response to a state of non-occurrence of the predetermined type of event remaining over a continuous duration, the parameter update means (111) updates the value of the parameter such that the degree of the pseudo-drowsiness increases as the continuous duration extends.

3. The robot (200) according to claim 2, further comprising:
illuminance detection means (215) for detecting ambient illuminance around the robot, wherein
in response to a state of non-occurrence of the predetermined type of event remaining over a continuous duration, the parameter update means (111) updates the value of the parameter such that the degree of the pseudo-drowsiness increases more at a lower level of the ambient illuminance detected by the illuminance detection means (215) than at a higher level of the ambient illuminance.

4. The robot (200) according to any one of claims 1 to 3, further comprising:
action control means (115) that operates the robot (200), wherein
the action control means (115)
causes the robot to perform, as a spontaneous action, a breathing action representing pseudo-breathing or a non-breathing action that is an action other than the breathing action, and
reduces a frequency of the robot performing as the spontaneous action the non-breathing action as the degree of the pseudo-drowsiness increases.

5. The robot (200) according to any one of claims 1 to 3, wherein
the parameter update means (111)
in response to the ambient illuminance around the robot (200) exceeding a first illuminance threshold, updates the value of the parameter to a value preset as a value that allows the state of the robot (200) to be switched by the state control means (112) from the pseudo-sleep state to the normal state, and
in response to the ambient illuminance around the robot (200) remaining below a second illuminance threshold over a predetermined continuous duration, updates the value of the parameter to a value preset as a value that allows the state of the robot to be switched by the state control means (112) from the normal state to the pseudo-sleep state.

6. The robot (200) according to any one of claims 1 to 3,wherein:
the state control means (112)
in response to the value of the parameter changing from a value outside a first range to a value within the first range, switches the state of the robot (200) from the normal state to the pseudo-sleep state, and
in response to the value of the parameter changing from a value within a second range to a value outside the second range, switches the state of the robot (200) from the pseudo-sleep state to the normal state, and
the second range includes the first range.

7. The robot (200) according to any one of claims 1 to 3, wherein the parameter update means (111) detects an occurrence of a predetermined type of event based on an output from a predetermined sensor.

8. The robot (200) according to claim 7, wherein
the predetermined sensor is a microphone (213), and
the event includes occurrence of a loud sound or being spoken to.

9. The robot (200) according to claim 7, wherein
the predetermined sensor is a touch sensor (211), an acceleration sensor (212), or a gyrosensor (214), and
the event includes being petted, struck, or turned over.

10. A robot control method for controlling a robot (200) capable of representing a pseudo-sleep state in a manner different from a normal state, the method comprising:
updating a value of a parameter indicating a degree of pseudo-drowsiness of the robot (200), and
switching the state of the robot (200) between the pseudo-sleep state and the normal state based on the updated value of the parameter,
**characterized by**
storing in advance in a storage (120) an event table (123) in which a value corresponding to a type of event is associated with each type of event, and in that
the updating is performed at each occurrence of a predetermined type of event, based on the event table (123), with the value corresponding to the type of the event having occurred.

11. A computer program comprising instructions to cause the robot (200) of claim 1 to execute the steps of the method of claim 10.

## Patentansprüche

1. Roboter (200), der in der Lage ist, einen Pseudo-Schlafzustand auf eine Weise darzustellen, die sich von einem Normalzustand unterscheidet, wobei der Roboter (200) umfasst:
eine Parameteraktualisierungseinrichtung (111) zum Aktualisieren eines Wertes eines Parameters, der den Grad von Pseudo-Schläfrigkeit des Roboters angibt, und
eine Zustandssteuereinrichtung (112) zum Umschalten des Zustands des Roboters (200) zwischen dem Pseudo-Schlafzustand und dem Normalzustand auf der Grundlage des Wertes des von der Parameteraktualisierungseinrichtung (111) aktualisierten Parameters,
**gekennzeichnet durch**
einen Speicher (120) zum Speichern einer Ereignistabelle (123), in der jedem Ereignistyp ein diesem entsprechender Wert zugeordnet ist, und **dadurch, dass**
die Aktualisierung bei jedem Auftreten eines vorbestimmten Ereignistyps auf der Grundlage der Ereignistabelle (123) erfolgt, mit dem Wert, der dem Typ des aufgetretenen Ereignisses entspricht.

2. Roboter (200) nach Anspruch 1, wobei die Parameteraktualisierungseinrichtung (111) als Reaktion darauf, dass der vorbestimmte Ereignistyp über einen fortlaufenden Zeitraum hinweg nicht auftritt, den Wert des Parameters so aktualisiert, dass der Grad der Pseudo-Schläfrigkeit mit zunehmender Dauer des fortlaufenden Zeitraums ansteigt.

3. Roboter (200) nach Anspruch 2, der ferner umfasst:
eine Beleuchtungsstärkemessvorrichtung (215) zum Erfassen der Umgebungsbeleuchtungsstärke um den Roboter herum, wobei
die Parameteraktualisierungseinrichtung (111) als Reaktion darauf, dass der Zustand des Nicht-Auftretens der vorbestimmten Art von Ereignis über einen fortlaufenden Zeitraum anhält, den Wert des Parameters so aktualisiert, dass der Grad der Pseudo-Schläfrigkeit bei einem niedrigeren Wert der von der Beleuchtungsstärkemessvorrichtung (215) erfassten Umgebungsbeleuchtungsstärke stärker zunimmt als bei einem höheren Wert der Umgebungsbeleuchtungsstärke.

4. Roboter (200) nach einem der Ansprüche 1 bis 3, ferner umfassend:
eine Aktionssteuereinrichtung (115), die den Roboter (200) steuert, wobei
die Aktionssteuereinrichtung (115)
den Roboter veranlasst, als spontane Aktion eine Atmungsaktion auszuführen, die eine Pseudoatmung darstellt, oder eine Nicht-Atmungsaktion, die eine andere Aktion als die Atmungsaktion ist, und
eine Häufigkeit verringert, mit der der Roboter die Nicht-Atmungsaktion als die spontane Aktion ausführt, wenn der Grad der Pseudo-Schläfrigkeit zunimmt.

5. Roboter (200) gemäß einem der Ansprüche 1 bis 3, wobei
die Parameteraktualisierungseinrichtung (111)
als Reaktion darauf, dass die Umgebungsbeleuchtungsstärke um den Roboter (200) herum einen ersten Beleuchtungsstärkeschwellenwert überschreitet, den Wert des Parameters auf einen Wert aktualisiert, der so voreingestellt ist, dass der Zustand des Roboters (200) durch die Zustandssteuereinrichtung (112) vom Pseudo-Schlafzustand in den Normalzustand umgeschaltet werden kann, und
als Reaktion darauf, dass die Umgebungsbeleuchtungsstärke um den Roboter (200) herum über eine vorbestimmte zusammenhängende Dauer hinweg unter einem zweiten Beleuchtungsstärkeschwellenwert bleibt, den Wert des Parameters auf einen Wert aktualisiert, der so voreingestellt ist, dass der Zustand des Roboters durch die Zustandssteuereinrichtung (112) vom Normalzustand in den Pseudo-Schlafzustand umgeschaltet werden kann.

6. Roboter (200) gemäß einem der Ansprüche 1 bis 3, wobei:
die Zustandssteuereinrichtung (112)
als Reaktion darauf, dass sich der Wert des Parameters von einem Wert außerhalb eines ersten Bereichs zu einem Wert innerhalb des ersten Bereichs ändert, den Zustand des Roboters (200) vom Normalzustand in den Pseudo-Schlafzustand umschaltet, und
als Reaktion darauf, dass sich der Wert des Parameters von einem Wert innerhalb eines zweiten Bereichs zu einem Wert außerhalb des zweiten Bereichs ändert, den Zustand des Roboters (200) vom Pseudo-Schlafzustand in den Normalzustand umschaltet, und
der zweite Bereich den ersten Bereich umfasst.

7. Roboter (200) nach einem der Ansprüche 1 bis 3, wobei die Parameteraktualisierungseinrichtung (111) das Auftreten eines vorbestimmten Ereignistyps auf der Grundlage eines Ausgangssignals eines vorbestimmten Sensors erfasst.

8. Roboter (200) nach Anspruch 7, wobei
der vorbestimmte Sensor ein Mikrofon (213) ist und
das Ereignis das Auftreten eines lauten Geräusches oder das Angesprochenwerden umfasst.

9. Roboter (200) nach Anspruch 7, wobei
der vorbestimmte Sensor ein Berührungssensor (211), ein Beschleunigungssensor (212) oder ein Gyrosensor (214) ist und
das Ereignis das Streicheln, das Schlagen oder das Umdrehen umfasst.

10. Verfahren zur Steuerung eines Roboters (200), der in der Lage ist, einen Pseudo-Schlafzustand auf eine Weise darzustellen, die sich von einem Normalzustand unterscheidet, wobei das Verfahren umfasst:
Aktualisieren eines Wertes eines Parameters, der den Grad von Pseudo-Schläfrigkeit des Roboters (200) angibt, und
Umschalten des Zustands des Roboters (200) zwischen dem Pseudo-Schlafzustand und dem Normalzustand auf der Grundlage des aktualisierten Wertes des Parameters,
**gekennzeichnet durch**
das vorherige Speichern einer Ereignistabelle (123) in einem Speicher (120), in der jedem Ereignistyp ein diesem entsprechender Wert zugeordnet ist, und **dadurch, dass**
die Aktualisierung bei jedem Auftreten eines vorbestimmten Ereignistyps auf der Grundlage der Ereignistabelle (123) erfolgt, mit dem Wert, der dem Typ des aufgetretenen Ereignisses entspricht.

11. Computerprogramm, das Anweisungen umfasst, um den Roboter (200) nach Anspruch 1 dazu zu veranlassen, die Schritte des Verfahrens nach Anspruch 10 auszuführen.

## Revendications

1. Robot (200) capable de représenter un état de pseudo-sommeil de manière différente d'un état normal, le robot (200) comprenant :
un moyen de mise à jour de paramètre (111) pour mettre à jour la valeur d'un paramètre indiquant le degré de pseudo-somnolence du robot, et
un moyen de contrôle d'état (112) pour commuter l'état du robot (200) entre l'état de pseudo-sommeil et l'état normal sur la base de la valeur du paramètre mis à jour par le moyen de mise à jour de paramètre (111),
**caractérisé**
**par** un moyen de stockage (120) pour stocker une table d'événements (123) dans laquelle une valeur correspondant à un type d'événement est associée à chaque type d'événement, et
en ce que la mise à jour est exécutée à chaque occurrence d'un type d'événement prédéterminé, sur la base de la table d'événements (123), avec la valeur correspondant au type de l'événement survenu.

2. Robot (200) selon la revendication 1, dans lequel, en réponse à un état de non-occurrence du type d'événement prédéterminé restant pendant une durée continue, le moyen de mise à jour de paramètre (111) met à jour la valeur du paramètre de sorte que le degré de pseudo-somnolence augmente à mesure que la durée continue s'étend.

3. Robot (200) selon la revendication 2, comprenant en outre :
un moyen de détection d'éclairement (215) pour détecter l'éclairement ambiant autour du robot,
dans lequel, en réponse à un état de non-occurrence du type d'événement prédéterminé restant pendant une durée continue, le moyen de mise à jour de paramètre (111) met à jour la valeur du paramètre de sorte que le degré de pseudo-somnolence augmente davantage à un niveau inférieur de l'éclairement ambiant détecté par le moyen de détection d'éclairement (215) qu'à un niveau supérieur de l'éclairement ambiant.

4. Robot (200) selon l'une quelconque des revendications 1 à 3, comprenant en outre :
un moyen de contrôle d'action (115) qui commande le robot (200),
dans lequel le moyen de contrôle d'action (115)
commande au robot d'exécuter, comme une action spontanée, une action de respiration représentant une pseudo-respiration ou une action de non-respiration, qui est une action autre que l'action de respiration, et
réduit la fréquence d'exécution par le robot de l'action de non-respiration comme action spontanée à mesure que le degré de pseudo-somnolence augmente.

5. Robot (200) selon l'une quelconque des revendications 1 à 3, dans lequel le moyen de mise à jour de paramètre (111)
en réponse au dépassement d'un premier seuil d'éclairement par l'éclairement ambiant autour du robot (200), met à jour la valeur du paramètre à une valeur prédéfinie comme une valeur permettant de commuter l'état du robot (200) par le moyen de contrôle d'état (112) de l'état de pseudo-sommeil à l'état normal, et
en réponse au fait que l'éclairement ambiant autour du robot (200) reste en dessous d'un deuxième seuil d'éclairement pendant une durée continue prédéterminée, met à jour la valeur du paramètre à une valeur prédéfinie comme valeur permettant de commuter l'état du robot par le moyen de contrôle d'état (112) de l'état normal à l'état de pseudo-sommeil.

6. Robot (200) selon l'une quelconque des revendications 1 à 3, dans lequel :
le moyen de contrôle d'état (112) :
en réponse au changement de la valeur du paramètre d'une valeur en dehors d'une première plage à une valeur dans la première plage, commute l'état du robot (200) de l'état normal à l'état de pseudo-sommeil, et en réponse au changement de la valeur du paramètre d'une valeur comprise dans une deuxième plage à une valeur en dehors de la deuxième plage, commute l'état du robot (200) de l'état de pseudo-sommeil à l'état normal, et
la deuxième plage inclut la première plage.

7. Robot (200) selon l'une quelconque des revendications 1 à 3, dans lequel le moyen de mise à jour de paramètre (111) détecte l'occurrence d'un type d'événement prédéterminé sur la base d'une sortie provenant d'un capteur prédéterminé.

8. Robot (200) selon la revendication 7, dans lequel le capteur prédéterminé est un microphone (213), et l'événement inclut l'occurrence d'un son fort ou le fait d'être interpellé.

9. Robot (200) selon la revendication 7, dans lequel
le capteur prédéterminé est un capteur tactile (211), un accéléromètre (212) ou un gyroscope (214), et
l'événement inclut le fait d'être caressé, frappé ou retourné.

10. Procédé de contrôle de robot pour contrôler un robot (200) capable de représenter un état de pseudo-sommeil de manière différente d'un état normal, le procédé comprenant :
la mise à jour de la valeur d'un paramètre indiquant le degré de pseudo-somnolence du robot (200), et
la commutation de l'état du robot (200) entre l'état de pseudo-sommeil et l'état normal sur la base de la valeur mise à jour du paramètre,
**caractérisé**
**par** le stockage à l'avance, dans un moyen de stockage (120), d'une table d'événements (123) dans laquelle une valeur correspondant à un type d'événement est associée à chaque type d'événement, et
en ce que la mise à jour est exécutée à chaque occurrence d'un type d'événement prédéterminé, sur la base de la table d'événements (123), avec la valeur correspondant au type de l'événement survenu.

11. Programme informatique comprenant des instructions pour commander au robot (200) selon la revendication 1 d'exécuter les étapes du procédé selon la revendication 10.
